(19) Europäisches Patentamt
European Patent Office
Office européen des brevets

(11) **EP 3 745 552 A1**

(12) **EUROPEAN PATENT APPLICATION**

(43) Date of publication:
**02.12.2020 Bulletin 2020/49**

(51) Int Cl.:
**H02J 3/38** *(2006.01)*  **H02J 13/00** *(2006.01)*
**H04B 3/54** *(2006.01)*

(21) Application number: **19177574.1**

(22) Date of filing: **31.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FRONIUS INTERNATIONAL GmbH 4643 Pettenbach (AT)**

(72) Inventors:
• **GRASBÖCK, Richard**
  **4643 Pettenbach (AT)**
• **PREINING, Pascal**
  **4643 Pettenbach (AT)**
• **CHALUPAR, Daniel**
  **4643 Pettenbach (AT)**

(74) Representative: **Sonn & Partner Patentanwälte Riemergasse 14 1010 Wien (AT)**

(54) **INVERTER FOR A POWER GENERATION SYSTEM AND METHOD FOR OPERATING SUCH AN INVERTER**

(57) The invention relates to an inverter (200) for a power generation system (1000) comprising a DC-input (205), an AC-output (203) with an output filter (204) with a filter capacitor (CFilter) for transmission of an inverter current (I_Inverter) and for connection with a grid (300) of a grid impedance (ZGrid), wherein a ripple control transmitter (400) for transmitting a ripple control signal (I_Ripple) is in connection with the grid (300), and further comprising a controller (201) adapted to control a transmitter (201c) for a regulation of the inverter current (I_Inverer), and a method for operating such an inverter (200). According to the invention, the controller (201) comprises a detector (201) for determining the actual current (iCapRipple) of the ripple control signal (I_Ripple) across the filter capacitor (CFilter) and a regulator (201b) for regulating the inverter current (I_Inverter) based on the determined actual current (iCapRipple) of the ripple control signal (I_Ripple) and the grid impedance (ZGrid), and that the transmitter (201c) is adapted for transmitting the regulated inverter current (I_Inverter") via the AC-output (203) to the grid (300).

EP 3 745 552 A1

**Description**

The present invention in general relates to an inverter for a power generation system comprising a DC-input, an AC-output with an output filter with a filter capacitor for transmission of an inverter current and for connection with a grid of a grid impedance, wherein a ripple control transmitter transmitting a ripple control signal is in connection with the grid, and further comprising a controller adapted to control a transmitter for a regulation of the inverter current.

The invention further relates to a method for operating an inverter for a power generation system, wherein energy is provided via a DC-input, and an inverter current is transmitted from output filter with a filter capacitor via an AC-output, wherein the inverter is in connection with a grid of a grid impedance, and the grid is in connection with a ripple control transmitter transmitting a ripple control signal, and wherein a controller of the inverter controls a transmitter for regulation of the inverter current.

With increased use of decentralized energy generators, such as photovoltaic systems, power supply management has changed considerably over time. Many users of photovoltaic systems do not use all of their self-generated solar power at source, but instead feed some of it into a public grid. Electricity retailers also benefit from these additional power sources, particular during consumption peaks. Ripple control technology is a one-way communication based on superimposition of a ripple control signal onto a lower frequency power signal. A ripple control signal is, for example, a sinusoidal signal having a frequency range of 100Hz - 3000Hz. In an example, ripple control technology transmits data over power lines typically used to distribute power over a distribution network. The data is, in turn, used to control loads in the distribution grid. The data is transmitted, for example, from a central transmitter to a plurality of receivers. Electricity retailers use ripple control technology for several applications such as public lighting control, load shedding, switching of users' loads, management of users' energy meters, etc.

In general, the ripple control signal has a considerably smaller amplitude when compared to the power signal. An undesired amplification or attenuation of the ripple control signal disturbs the efficacy of the ripple control signal since the level of the ripple control signal is already small. Also, in case of a photovoltaic system, when an inverter is connected to the public grid, an output of the inverter forms an RLC resonant circuit with an impedance of the public grid, leading to an undesired amplification or attenuation of the ripple control signal. The extent of amplification or attenuation of the ripple control signal is based on several parameters, for example, an inductance of the grid, a ripple control signal frequency of the ripple control signal, capacitance of a filter capacitor of the inverter, etc. This amplification or attenuation of the ripple control signal is undesired by the electricity retailers as the inverter may fail to decode the ripple control signal transmitted by the electricity retailers. In other words, the inverter disturbs the ripple control signal transmitted by the electricity retailers via the grid. Therefore, it becomes necessary to keep the amplification or attenuation of the ripple control signal as small as possible for effective communication of the ripple control signal.

Thus, there is a need for a highly sensitive, cost-effective and simple solution for reducing the amplification or attenuation of the ripple control signal, thereby increasing the efficiency of communication of the ripple control signal from a ripple control source to multiple receivers.

This object is solved by an inverter, wherein the controller comprises a detector for determining the actual current of the ripple control signal across the filter capacitor and a regulator for regulating the inverter current based on the determined actual current of the ripple control signal and the grid impedance, and that a transmitter is adapted for transmitting the regulated inverter current via the AC-output to the grid.

This object of the present invention is also solved by a method for operating an inverter, characterized in the steps of:

- determining the actual current of the ripple control signal across the filter capacitor with a detector;

- regulating the inverter current based on the determined actual current of the ripple control signal and the grid impedance with a regulator; and

- transmitting the regulated inverter current via the AC-output to the grid with the transmitter.

The inverter and the method for operating an inverter according to the present invention, thus, compensate for the unwanted attenuation in the ripple control signal transmitted by the ripple control transmitter caused by the inverter. The desired inverter current can be continuously computed or can be computed at predefined time intervals by the regulator. The controller of the inverter actively compensates any current flowing into the inverter, and thereby, reduces the undesired influence of the inverter on the ripple control signal. An inverter according to the present invention can act as a repeater for the ripple control signal within a grid.

The following detailed description is further described and explained with reference to the following figures:

Figure 1    exemplary illustrates an architecture of a power generation system with an inverter in accordance with the present invention;

Figure 2     illustrates a schematic circuit diagram of the inverter for the power generation system connected to a ripple control transmitter via a grid and in accordance with the present invention;

Figure 3     illustrates an equivalent circuit diagram of the inverter for the power generation system in accordance with the present invention displaying a flow of an actual ripple control current from the ripple control transmitter to the inverter via the grid;

Figure 4     illustrates an equivalent circuit diagram of the inverter for the power generation system in accordance with the present invention displaying a flow of current generated by an inverter current source of the inverter; and

Figure 5     illustrates a flowchart of a method for operating the inverter for the power generation system connected to the ripple control transmitter via the grid.

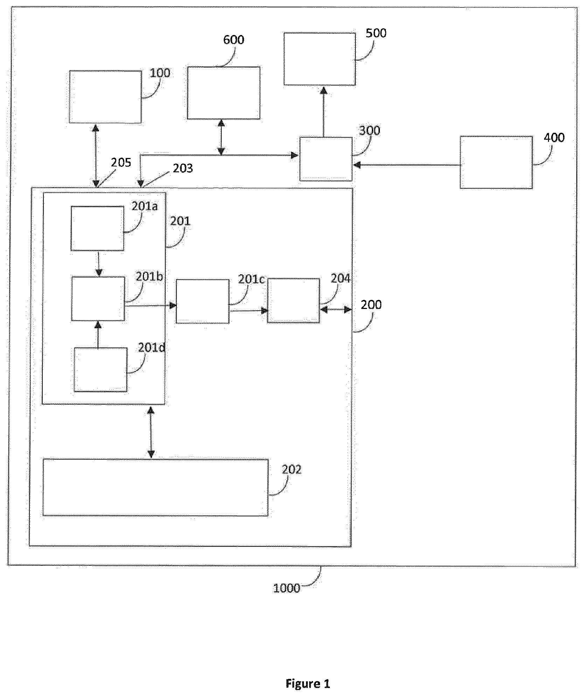

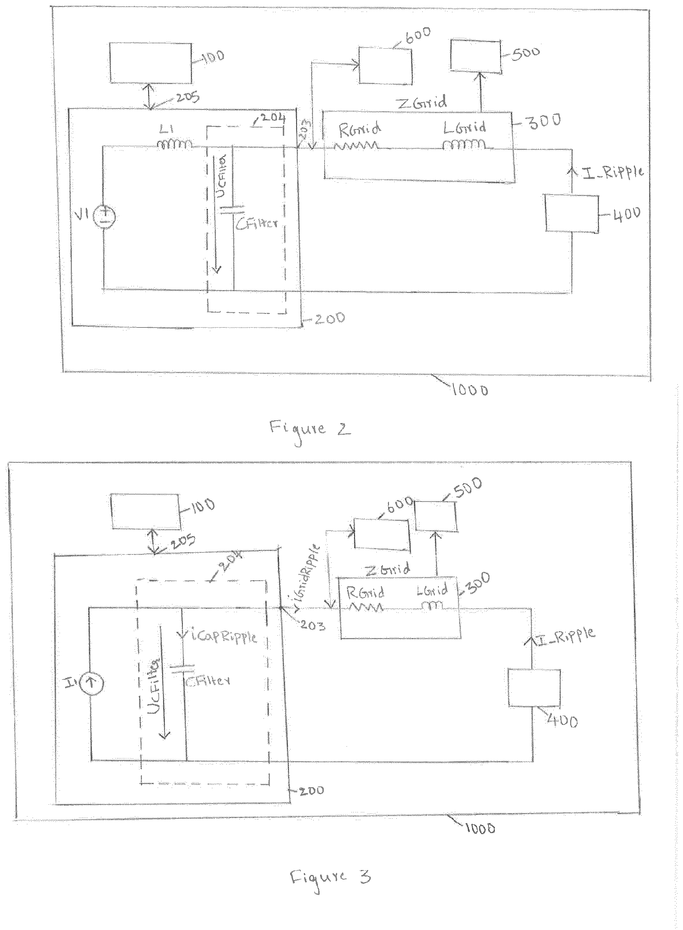

Figure 1 exemplary illustrates an architecture of a power generation system 1000 comprising an inverter 200 in accordance with the present invention. The inverter 200 comprises a DC-input 205 for connection with an energy source and an AC-output 203 for connection to a grid 300, especially a public grid 300 of a grid impedance ZGrid. At least one ripple control transmitter 400 for transmitting a ripple control signal I_Ripple at a ripple control signal frequency fRipple is connected to the grid 300. Inverter 200 comprises an output filter 204 with a filter capacitor CFilter (see Fig. 2). Controller 201 of the inverter 200 is adapted to control a transmitter for a regulation of an inverter current I_Inverter. According to the present invention the controller 201 of the inverter 200 further comprises: a detector 201a for determining the actual current iCapRipple of the ripple control signal I_Ripple across the filter capacitor CFilter; and a regulator 201b for regulating the inverter current I_Inverter based on the determined actual current iCapRipple of the ripple control signal I_Ripple and the grid impedance ZGrid; whereby the transmitter 201c is adapted for transmitting the regulated inverter current I_Inverter via the AC-output 203 to the grid 300. In an embodiment, the transmitter 201c is a switching bridge of the inverter 200. The ripple control signal frequency fRipple usually is defined by electricity retailers. Alternatively, the ripple control signal frequency fRipple could also be automatically determined by the inverter 200.

In an example, the power generation system 1000 is a renewable power source such as a photovoltaic plant, a wind farm, a hydroelectric power plant, a biogas plant, a tidal plant, or any combination thereof. The inverter 200 as shown in Figure 1 is connected via DC-input 205 to a photovoltaic unit 100, which can comprise one or more photovoltaic strings of photovoltaic modules within a photovoltaic array. The inverter 200 converts the DC current received from the photovoltaic unit 100 via DC-input 205 into an AC current, which can be fed to the grid 300 via the AC-output 203.

The ripple control transmitter 400 transmits the ripple control signal I_Ripple at the ripple control signal frequency fRipple to the grid 300. The ripple control signal I_Ripple is region specific based on the location of the ripple control transmitter 400 and is determined by, for example, an energy provider. The ripple control signal I_Ripple is superimposed onto a lower frequency power signal during transmission to the inverter 200. In an example, the inverter 200 is specific to a consumer of the energy provider. The inverter 200 receives the ripple control signal I_Ripple from the ripple control transmitter 400 via the grid 300. In case, when the inverter 200 receives the ripple control signal I_Ripple with a reduced strength or amplitude, the inverter 200 is unable to decode the ripple control signal I_Ripple.

The inverter 200 comprises the controller 201 for the regulation of the ripple control signal I_Ripple received by the inverter 200 from the ripple control transmitter 400 via the grid 300. In an example, the inverter 200 is a single-phase inverter. In another example, the inverter 200 is a three-phase inverter. In an embodiment, the controller 201 is integrated into the inverter 200. In another embodiment, the controller 201 may be a separate device external to the inverter 200. The inverter 200 may additionally be connected to one or more loads 600, for example, a lighting source, a heating source, an electrical drive, etc.

The controller 201 comprises the detector 201a which determines the actual current iCapRipple of the ripple control signal I_Ripple across the filter capacitor CFilter of the output filter 204 of the inverter 200 (see Figures 2-4). The detector 201a can be adapted to determine the actual current iCapRipple of the ripple control signal I_Ripple based on an actual voltage UCFilter across the filter capacitor CFilter and the capacitance of the filter capacitor CFilter. The detector 201a transmits an output to the regulator 201b. The output of the detector 201a is the actual current iCapRipple of the ripple control signal I_Ripple across the filter capacitor CFilter. The regulator 201b receives the output of the detector 201a. The regulator 201b regulates the inverter current I_Inverter based on the output of the detector 201a and the grid impedance ZGrid. The grid impedance ZGrid can be predefined by the energy provider or can be detected or measured by a grid impedance detector 201d within the controller 200. The inverter 200 further comprises a transmitter 201c which transmits the regulated inverter current I_Inverter via the AC-output 203 to the grid 300.

The inverter 200 comprises a user interface 202 in communication with the controller 201 of the inverter 200. The user interface 202 is, for example, a display screen, a touch screen or a touch pad, a microphone, buttons, lights, an augmented reality display device, a virtual reality display device or any combination thereof. The power generation system 1000 comprises a ripple control receiver 500 in communication with the grid 300 to receive the ripple control signal I_Ripple from the ripple control transmitter 400. If the controller 201 of the inverter 200 is able to encode the ripple control signal I_Ripple from the ripple control transmitter 400 new possibilities for a remote control of inverters 200 within grid 300 are possible.

Figure 2 illustrates the schematic circuit diagram of the inverter 200 for the power generation system 1000 connected to the ripple control transmitter 400 via the grid 300. The grid impedance ZGrid of the grid 300 is represented by a grid resistor RGrid and a grid inductance LGrid, connected in series with the ripple control transmitter 400. The inverter 200 comprises an inductor L1 and an inverter voltage source V1 such that a first end of the filter capacitor CFilter of the output filter 204 is connected to a first end of the inductor L1. Inductor L1 and filter capacitor CFilter form an output LC filter of the inverter 200. The first end of the filter capacitor CFilter is also in connection with the grid resistor RGrid or the grid impedance ZGrid, respectively.

In an embodiment, the inverter 200 comprises an output LCL filter, with an additional inductor L2 which combines with the grid inductance LGrid. This embodiment is not explicitly shown in Figure 2. Also, it would be appreciated that those skilled in the art would be able to devise various other inverter 200 features used for different applications, although not explicitly described or shown herein.

The ripple control transmitter 400 transmits the ripple control signal I_Ripple at a specific frequency, the ripple control signal frequency fRipple, to the inverter 200 via the grid 300. The ripple control signal frequency fRipple is usually determined by the network operator based on the geographical location of the ripple control transmitter 400. During the initial configurations of the controller 201 of the inverter 200, the ripple control signal frequency fRipple used by the network operator to transmit the ripple control signal I_Ripple is fed via the user interface 202 of the inverter 200 by a user.

The detector 201a of the controller 201 receives the transmitted ripple control signal I_Ripple from the ripple control transmitter 400. For example, undesired amplification or attenuation of the ripple control signal I_Ripple is caused as a result of the formation of a RLC resonant circuit by the inverter 200 connected to the grid 300. As shown in Figure 2, the filter capacitor CFilter of the output filter 204 along with grid resistor RGrid and the grid inductance LGrid forms the RLC circuit.

Figure 3 illustrates the equivalent circuit diagram of an inverter 200 for a power generation system 1000 in accordance with the present invention displaying the flow of the actual current iCapRipple of the ripple control signal I_Ripple from the ripple control transmitter 400 to the inverter 200. Figure 3 is the equivalent circuit diagram of the schematic circuit diagram of the inverter 200 for a power generation system 1000 as illustrated in Figure 2.

Since the current of the inductor L1 can be controlled by the controller 201, the inverter voltage source V1 and the inductor L1 of the inverter 200 can be replaced by an inverter current source I1 generating an inverter current I_Inverter. The equivalent circuit diagram of the inverter 200 as in Figure 3, thus comprises the inverter current source I1 replacing the inverter voltage source V1 and the inductor L1 of the inverter 200.

The actual current iCapRipple of the ripple control signal I_Ripple produced by the ripple control transmitter 400 flows across the grid 300 and the filter capacitor CFilter of the output filter 204. Figure 3 shows a current component iGridRipple flowing across the grid 300 and a current component iCapRipple flowing across the filter capacitor CFilter. The actual current iCapRipple is equal to the current iGridRipple through the grid impedance ZGrid but flows in a direction opposite to that of current iGridRipple and is given by Equation A below. The directions of the flow of the current iGridRipple across the grid 300 and the actual current iCapRipple through the filter capacitor CFilter is shown in Figure 3.

$$\text{iCapRipple} = -\text{iGridRipple} \,\text{----}\, \text{Equation A}$$

The inverter 200 comprises a voltage sensor to measure the voltage UCFilter across the filter capacitor CFilter. The measured voltage UCFilter corresponds to an actual ripple control voltage of the ripple control signal I_Ripple across the filter capacitor CFilter. The voltage sensor transmits the measured voltage UCFilter to the detector 201a. The detector 201a filters the measured voltage UCFilter transmitted by the voltage sensor. The detector 201a generates a quadrature signal for the filtered voltage UCFilter using a quadrature signal generator. The quadrature signal generator is, for example, a second order generalized integrator (SOGI). The generated quadrature signal for the actual ripple control voltage is a 90° leading sine wave with the same amplitude as that of the measured voltage UCFilter.

The detector 201a computes the current iCapRipple based on the generated quadrature signal for the measured voltage UCFilter and an admittance of the filter capacitor CFilter. The product of the generated quadrature signal for the measured voltage UCFilter and the admittance of the filter capacitor CFilter provides the current iCapRipple. The admittance of the filter capacitor, YC, is given by the below Equation 1.

$$YC = (\omega * CFilter) ---- \text{Equation 1}$$

The angular frequency, $\omega$, in the Equation 1 depends on the ripple control signal frequency, fRipple, and is given by the below Equation 2.

$$\omega = 2\pi * fRipple ---- \text{Equation 2}$$

The filter capacitor CFilter of the inverter 200 along with the grid resistor RGrid and the grid inductance LGrid of the grid 300 forms the RLC circuit, which causes undesired amplification or attenuation of the ripple control signal I_Ripple.

The detector 201a transmits the determined actual current iCapRipple of the ripple control signal I_Ripple to the regulator 201b of the controller 201. The regulator 201b receives a value of the actual current iCapRipple. The regulator 201b further receives the grid impedance ZGrid. In an embodiment, the grid impedance detector 201d receives the grid impedance ZGrid value via the user interface 202 of the inverter 200. In another embodiment, the grid impedance detector 201d determines the grid impedance ZGrid using a grid model based on the grid resistance RGrid and the grid inductance LGrid. The grid impedance detector 201d records current and voltage curves before and during the application of an adjustable load current into the grid 300 of the power generation system 1000. The grid impedance detector 201d uses a select grid model to determine the grid impedance ZGrid of the grid 300. The grid model is, for example, specific to the grid 300 employed by the network operator for the transmission of the ripple control signal.

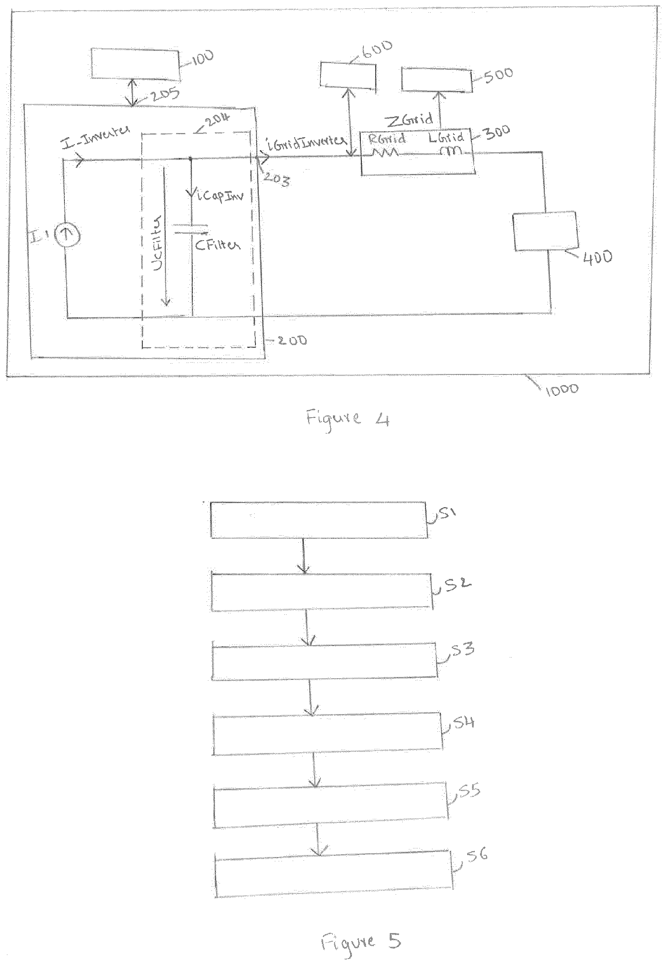

Figure 4 illustrates the equivalent circuit diagram of the inverter 200 for the power generation system 1000 in accordance with the present invention displaying the flow of a current generated by the inverter current source, I1. The inverter current source I1 generating the inverter current I_Inverter flows partially across the grid 300 and partially across the filter capacitor CFilter. A current component IGridInverter of the current I_Inverter flows across the grid 300 and a current component iCapInv of the current I_Inverter flows across the filter capacitor CFilter.

The regulator 201b uses the grid impedance ZGrid to determine the current iCapInv and the current IGridInverter. In accordance with the Kirchhoff's Law, the current I_Inverter is equal to the sum of the currents iCapInv and IGridInverter. That is to say, the current leaving the inverter current source I1 flows partially across the grid impedance ZGrid and partially across the filter capacitor CFilter. The current IGridInverter as per the Kirchhoff's Law is as in the below Equation 3.

$$iGridInverter = (XC/(XG+XC)) * I\_Inverter ---- \text{Equation 3}$$

The term XC is the capacitive reactance of the filter capacitor CFilter of the output filter 204. The term XG is a reactance of the grid 300 and is given by the below Equation 4.

$$XG = \omega * LGrid ---- \text{Equation 4}$$

The current iCapInv as per the Kirchhoff's Law is given by the below Equation 5.

$$iCapInv = XG/(XG+XC) * I\_Inverter ---- \text{Equation 5}$$

Thus, there are two current components, iCapRipple and iCapInv, flowing across the filter capacitor CFilter of the output filter 204. The current iCap is the total current flowing across the filter capacitor CFilter due to two current components, iCapRipple and iCapInv. The current iCap is given by the below Equation 6.

$$iCap = iCapRipple + iCapInv ---- \text{Equation 6}$$

But the current iCapInv in turn alters the voltage UCFilter across the filter capacitor CFilter. That is, the current iCapInv in turn varies the current iCapRipple as determined by the detector 201a. Therefore, it is necessary to take the value of the current iCapInv into account while determining the current iCapRipple and thus iGridRipple.

Regulator 201b now computes the actual current iCapRipple of the ripple control signal I_Ripple across the filter capacitor CFilter by considering the variations caused due to the current iCapInv. The actual current across the filter capacitor CFilter by considering the variations caused due to the current iCapInv is denoted by iCapRipple". The current iCapRipple" is an instantaneous current flowing across the filter capacitor CFilter by considering the variations caused due to the current iCapInv. And, also based on Equation A, the current iCapRipple" is equal to a negative value of an instantaneous current component of the actual ripple control current flowing across the grid 300, iGridRipple" and is as given in below Equation 7.

$$iCapRipple'' = -iGridRipple'' \text{ ---- Equation 7}$$

Regulator 201b computes an instantaneous value of the inverter current I_Inverter" based on the actual current iCapRipple". The current I_Inverter" is the regulated inverter current regulated by the regulator 201b. The regulated inverter current I_Inverter" is computed based on the values of the impedances XC and XG as given in the below Equation 8.

$$I\_Inverter'' = (XG+XC)/XC * iCap - XG/XC * I\_Inverter \text{ ---- Equation 8}$$

The value of the regulated inverter current I_Inverter" is such that the current component iGridInverter" is equal to the instantaneous value of the current component iGridRipple" flowing across the grid 300 due to the ripple control transmitter 400. Since the directions of the currents iGridInverter" and iGridRipple" are opposite to each other, the sum of the currents iGridInverter" and iGridRipple" is equal to zero. The currents iGridInverter" and I_Inverter" are related to each other and vary with respect to each other and is as given in equation 9.

$$iGridInverter'' = (XC/(XG+XC)) * I\_Inverter'' = -iGridRipple'' \text{ ---- Equation 9}$$

Since the sum of the currents iGridInverter" and iGridRipple" is equal to zero at any instance of time, the controller 201 negates undesired attenuation or damping of the ripple control signal arising at any given time. In other words, the desired ripple control current which flows from the inverter current source I1 across the grid 300 is monitored and regulated continuously. The regulator 201b continuously regulates the actual inverter current I_Inverter which flows via the AC-output 203 to the grid 300, thereby compensating the actual current iCapRipple of the ripple control signal I_Ripple.

The instantaneous value of the inverter current I_Inverter" is an instantaneous output of the photovoltaic unit 100. That is, the current generated by the photovoltaic unit 100 is varied to indirectly compensate for any irregularities in the ripple control signal I_Ripple. The ripple control signal I_Ripple remains unaffected in the process. This variation due to the regulation of the inverter current I_Inverter is negligible and does not vary the inverter current I_Inverter considerably.

The regulator 201b, thus, compensates for the unwanted attenuation in the ripple control signal I_Ripple transmitted by the ripple control transmitter 400 caused by the inverter 200. In an embodiment, the sum of the actual current iCapRipple and the regulated inverter current I_Inverter is equal to zero. The term "equal to zero" should not be understood as the exact number zero but as a range around zero. In another embodiment, the sum of the actual current and the desired inverter current may not equal to zero but equal to a certain value, for example, in order to meet specific requirements.

In an embodiment, the desired inverter current is continuously regulated by the regulator 201b. That is, the controller 201 actively compensates any current flowing into the inverter 200, and thereby, reduces the undesired influence of the inverter 200 on the ripple control signal I_Ripple. In another embodiment, the compensation of the current flowing into the inverter 200 occurs at predefined time intervals.

Figure 5 illustrates a flowchart of the method for operating the inverter 200 for the power generation system 1000 connected to the ripple control transmitter 400 via the grid 300. The inverter 200 comprises the controller 201 adapted to control the transmitter 201c for the regulation of the inverter current I_Inverter. The actual current iCapRipple of the ripple control signal I_Ripple produced by the ripple control transmitter 400 flows across the grid 300 and the filter capacitor CFilter of the output filter 204 of the inverter 200. At step S1, the inverter 200 comprises the voltage sensor which measures the voltage value UCFilter across the filter capacitor CFilter of the inverter 200. The measured voltage UCFilter corresponds to the actual voltage of the ripple control signal I_Ripple across the filter capacitor CFilter. The detector 201a receives the actual voltage UCFilter across the filter capacitor CFilter from the voltage sensor.

At step S2, the detector 201a filters the actual voltage UCFilter and generates the quadrature signal for the filtered actual voltage UCFilter using the quadrature signal generator, for example, the second order generalized integrator (SOGI). The generated quadrature signal for the actual voltage is a 90° leading sine wave with the same amplitude as that of the actual voltage UCFilter.

At step S3, the detector 201a determines the actual current iCapRipple across the filter capacitor CFilter of the output filter 204. The detector 201a is adapted to determine the actual current iCapRipple based on the filtered actual voltage UCFilter and the admittance of the filter capacitor CFilter.

At step S4, the regulator 201b regulates the inverter current I_Inverter based on the determined actual current iCapRipple and the grid impedance ZGrid of the grid 300. The regulator 201b, further receives the grid impedance ZGrid from the grid impedance detector 201d. In an embodiment, the grid impedance detector 201d receives the grid impedance ZGrid via the user interface 202 of the inverter 200. In another embodiment, the grid impedance detector 201d determines the grid impedance ZGrid of the grid 300. The regulator 201b uses the value of the grid impedance ZGrid received from the grid impedance detector 201d to determine the current iCapInv and the current iGridInverter. But the current iCapInv in turn, alters the actual voltage UCFilter across the filter capacitor CFilter. That is, the current iCapInv in turn varies the current iGridInverter. Therefore, it is necessary to take the value of the current iCapInv into account while determining the iCapRipple. The current iCapRipple in turn, is the current iGridRipple as per Equation A.

At step S5, the regulator 201b computes the instantaneous value of the inverter current I_Inverter" based on the current iCapRipple" across the filter capacitor CFilter by considering the variations caused due to the current iCapInv. Since the sum of the currents iGridInverter" and iGridRipple" is equal to zero at any instance of time, the controller 201 negates the undesired attenuation or damping of the ripple control signal at any given time. The current iGridRipple" is the instantaneous current component of the actual current of the ripple control signal I_Ripple flowing across the grid 300.

At step S6, an error calculator of the controller 201 calculates a current-error iError based on a difference between the currents I_Inverter" and I_Inverter. Further, the error calculator computes a voltage setpoint needed to compensate the error by turning the current-error iError by 180 degree. At step S6, the transmitter 201c transmits the regulated inverter current I_Inverter"0000 via the AC-output 203 to the grid 300. In an embodiment, the transmitter 201c considers the current-error iError while transmitting the regulated inverter current I_Inverter to the grid 300. In an example, the transmitter 201c is the switching bridge of the inverter 200.

Since the sum of the currents iGridInverter" and iGridRipple" is equal to zero at any instance of time, the inverter 200 negates the undesired attenuation or damping of the ripple control signal at any given time. That is, the controller 201 continuously monitors the actual current of the ripple control signal and regulates an inverter current at the inverter current source I1, which flows to the grid 300 via the AC-output 203, thereby compensating the actual current of the ripple control signal.

**Claims**

1. Inverter (200) for a power generation system (1000) comprising a DC-input (205), an AC-output (203) with an output filter (204) with a filter capacitor (CFilter) for transmission of an inverter current (I_Inverter) and for connection with a grid (300) of a grid impedance (ZGrid), wherein a ripple control transmitter (400) for transmitting a ripple control signal (I_Ripple) in connection with the grid (300), and further comprising a controller (201) adapted to control a transmitter (201c) for a regulation of the inverter current (I_Inverter), **characterized in, that** the controller (201) comprises a detector (201a) for determining the actual current (iCapRipple) of the ripple control signal (I_Ripple) across the filter capacitor (CFilter) and a regulator (201b) for regulating the inverter current (I_Inverter) based on the determined actual current (iCapRipple) of the ripple control signal (I_Ripple) and the grid impedance (ZGrid), and that the transmitter (201c) is adapted for transmitting the regulated inverter current (I_Inverter") via the AC-output (203) to the grid (300).

2. Inverter (200) as claimed in claim 1, **characterized in, that** the detector (201a) is adapted to determine the actual current (iCapRipple) of the ripple control signal (I_Ripple) based on an actual voltage (UCFilter) across the filter capacitor (CFilter) and the capacitance of the filter capacitor (CFilter).

3. Inverter (200) as claimed in claim 1 or 2, **characterized in, that** the regulator (201b) is adapted to compensate the determined actual current (iCapRipple) of the ripple control signal (I_Ripple) based on the regulated inverter current (I_Inverter").

4. Inverter (200) as claimed in one of claims 1 to 3, **characterized in, that** the controller (201) further comprises a grid impedance detector (201d) for detection of the grid impedance (ZGrid) of the grid (300).

5. Inverter (200) as claimed in one of claims 1 to 4, **characterized in, that** a photovoltaic unit (100) is connected with the DC-input (205).

6. A method for operating an inverter (200) for a power generation system (1000), wherein energy is provided via a DC-input (205), and an inverter current (I_Inverter) is transmitted from an output filter (204) with a filter capacitor (CFilter) via an AC-output (203), wherein the inverter (200) is in connection with a grid (300) of a grid impedance (ZGrid) and the grid (300) is in connection with a ripple control transmitter (400) transmitting a ripple control signal (I_Ripple), and wherein a controller (201) of the inverter (200) controls a transmitter (201c) for regulation of the inverter current (I_Inverter), **characterized in that** the steps of:

- determining the actual current (iCapRipple) of the ripple control signal (I_Ripple) across the filter capacitor (CFilter) with a detector (201a);
- regulating the inverter current (I_Inverter) based on the determined actual current (iCapRipple) of the ripple control signal (I_Ripple) and the grid impedance (ZGrid) with a regulator (201b); and
- transmitting the regulated inverter current (I_Inverter") via the AC-output (203) to the grid (300) with the transmitter (201c).

7. The method as claimed in claim 6, **characterized in, that** the determined actual current (iCapRipple) of the ripple control signal (I_Ripple) is compensated based on the regulated inverter current (I_Inverter").

8. The method as claimed in claim 6 or 7, **characterized in, that** the actual current (iCapRipple) of the ripple control signal (I_Ripple) is determined based on an actual voltage (UCFilter) across the filter capacitor (CFilter) and the capacitance of the filter capacitor (CFilter).

9. The method as claimed in one of claims 6 to 8, wherein the grid impedance (ZGrid) of the grid (300) is detected by a grid impedance detector (201d).

10. The method as claimed in one of claims 6 to 9, wherein a photovoltaic unit (100) is connected to the DC-input (205) for feeding electrical energy generated in the photovoltaic unit (100) via the AC-output (203) to the grid (300).

Figure 1

Figure 2

Figure 3

Figure 4

Figure 5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/322079 A1 (LETAS HEINZ-HERMANN [DE]) 31 December 2009 (2009-12-31) | 1-3,5-8, 10 | INV. H02J3/38 |
| Y | * paragraph [0002] - paragraph [0011] * * paragraph [0012] - paragraph [0036] * * figures 1-7 * | 4,9 | H02J13/00 H04B3/54 |
| Y | US 2016/172860 A1 (LIPAN TUDOR [CA] ET AL) 16 June 2016 (2016-06-16) * paragraph [0001] - paragraph [0023]; figures 1-7 * | 1,6 | |
| Y | US 2017/288599 A1 (CHAPMAN PATRICK L [US] ET AL) 5 October 2017 (2017-10-05) * paragraph [0044] - paragraph [0050] * | 1,6 | |
| Y | GB 1 598 813 A (ENERTEC) 23 September 1981 (1981-09-23) * page 1, line 5 - page 1, line 26 * | 1,6 | |
| Y | KR 2011 0050797 A (AJOU UNIV IND ACAD COOP FOUND [KR]) 17 May 2011 (2011-05-17) * paragraph [0011] - paragraph [0013] * | 4,9 | |

TECHNICAL FIELDS
SEARCHED    (IPC)

H02J
H04B

The present search report has been drawn up for all claims

| Place of search | Date of completion of the search | Examiner |
|---|---|---|
| Munich | 20 November 2019 | Dudoignon, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 17 7574

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2019

| Patent document cited in search report | | Publication date | Patent family member(s) | | | Publication date |
|---|---|---|---|---|---|---|
| US 2009322079 | A1 | 31-12-2009 | AT | 520188 | T | 15-08-2011 |
| | | | CN | 101542869 | A | 23-09-2009 |
| | | | DE | 102006047503 | A1 | 10-04-2008 |
| | | | DK | 2070180 | T3 | 21-11-2011 |
| | | | EP | 2070180 | A1 | 17-06-2009 |
| | | | ES | 2369298 | T3 | 29-11-2011 |
| | | | US | 2009322079 | A1 | 31-12-2009 |
| | | | WO | 2008040513 | A1 | 10-04-2008 |
| US 2016172860 | A1 | 16-06-2016 | US | 2016172860 | A1 | 16-06-2016 |
| | | | WO | 2016095025 | A1 | 23-06-2016 |
| US 2017288599 | A1 | 05-10-2017 | NONE | | | |
| GB 1598813 | A | 23-09-1981 | AT | 367254 | B | 25-06-1982 |
| | | | GB | 1598813 | A | 23-09-1981 |
| KR 20110050797 | A | 17-05-2011 | NONE | | | |

EPO FORM P0459

For more details about this annex : see Official Journal of the European Patent Office, No. 12/82